# EUROPÄISCHE PATENTSCHRIFT

(11) **EP 1 260 265 B1**
(45) Veröffentlichungstag und Bekanntmachung des Hinweises auf die Patenterteilung: **02.02.2005**
(21) Anmeldenummer: 02010508.6
(22) Anmeldetag: 10.05.2002
(51) Int. Cl.: B01F 13/00, B01L 3/00, B01F 11/00

(54) **System mit Verfahrenseinheit zum Hybridisieren von Nukleinsäureproben, Proteinen und Gewebeschnitten**
System with processing set for the hybridisation of samples of nucleic acid, proteines and tissues
Système avec un set de traitament pour l'hybridation d'échantillons d'acide nucléique, protéines et tissus

(30) Priorität: 22.04.2002 CH 6682002; 25.05.2001 CH 9692001
(43) Veröffentlichungstag der Anmeldung: 27.11.2002
(73) Patentinhaber: Tecan Trading AG, 8708 Männedorf (CH)
(72) Erfinder: Streit, Wolfgang, 5400 Hallein (AT); Wenczel, Gyoergy, 5201 Seekirchen (AT); Mathes, Anton, 83364 Neukirchen (DE); Lamprecht, Waltraud, 5020 Salzburg (AT)
(74) Vertreter: Heusch, Christian

(56) Entgegenhaltungen:
- EP-A- 0 695 941
- EP-A- 0 891 811
- WO-A-00/09650
- WO-A-00/54874
- WO-A-02/41994
- US-A- 5 958 760
- ANDERS OLSSON: "Valve-less Diffuser Micropumps" TRITA-ILA, INSTITUTIONEN FOR ELEKTRISK MATTEKNIK KUNGL.TEKNISKA HOGSKOLAN, SE, Nr. 9803, 1998, Seiten 12-15,27, XP002190778 ISSN: 0281-2878

## Beschreibung

Die Erfindung betrifft ein System mit Verfahrenseinheiten zum Hybridisieren von Nukleinsäureproben, Proteinen oder Gewebeschnitten über einem Objektträger, gemäss der Einleitung des unabhängigen Anspruchs 1.

Die Verwendung von DNA-Proben (DNA = Desoxyribosenukleinsäure) und insbesondere von Mikroarrays solcher Proben stellt der Forschung eine wichtige Technik zur gleichzeitigen bzw. simultanen Analyse von Tausenden von Genen zur Verfügung. Diese Technik umfasst die Immobilisierung von DNA-Proben aus vielen Genen auf einer festen Substrat-Oberfläche, wie z.B. auf einem gläsernen Objektträger für ein Lichtmikroskop. Die DNA-Proben werden bevorzugt in einem Array von Probenflecken oder "spots", d.h. in einem zweidimensionalen Gitter auf dem Substrat angeordnet und man kann später - ausgehend von einer bestimmten Position innerhalb eines solchen Arrays auf den Ursprung der entsprechenden DNA-Probe zurückschliessen. Die Technik umfasst typischerweise die Kontaktierung des DNA-Proben-Arrays mit RNA-Muster-Suspensionen bzw. -Lösungen (RNA = Ribosenukleinsäure) um damit spezifische Nukleotidsequenzen in den DNA-Proben nachzuweisen. Um zwischen unterschiedlichen RNA-Mustern unterscheiden zu können, werden diese oft mit einem sogenannten "tag" oder "label", d.h. einem Molekül versehen, welches ein Fluoreszenzlicht mit einer spezifischen, jeweils dem speziellen RNA-Muster entsprechenden Wellenlänge aussendet.

Unter guten experimentellen Bedingungen hybridisieren bzw. binden die RNA-Muster an die immobilisierten DNA-Proben und bilden mit diesen zusammen hybride DNA-RNA-Stränge. Für jede der immobilisierten DNA-Proben und für spezielle RNA-Muster kann man Unterschiede in der Hybridisierung unter den DNA-Proben durch die Messung der Intensität und der Wellenlängenabhängigkeit der Fluoreszenz jedes einzelnen Mikroarray-Elements feststellen und so herausfinden, ob der Grad der Genexpression in den untersuchten DNA-Proben variiert. Mit der Verwendung von DNA-Mikroarrays können somit über die Expression von grossen Mengen von Genen und über deren Expressionsmuster umfassende Aussagen gemacht werden, obwohl nur geringe Mengen an biologischem Material eingesetzt werden müssen.

DNA-Mikroarrays haben sich als erfolgreiche Werkzeuge etabliert und die Geräte zur Durchführung der DNA-Hybridisierung wurden laufend verbessert (vgl. z.B. US 6,238,910 bzw. WO 00/09650). Dieses Dokument offenbart eine Vorrichtung zum Bereitstellen eines Hybridisierraums für die Hybridisierung von Nukleinsäureproben auf einem Objektträger, welche gegenüber diesem Objektträger bewegbar ausgebildet ist und eine ringförmige Dichtung zum Abschliessen des Hybridisierraums durch Beaufschlagen einer Oberfläche dieses Objektträgers umfasst. Zudem umfasst die offenbarte Vorrichtung Leitungen zum Zu- bzw. Ableiten von Medien in den Hybridisierraum hinein bzw. aus dem Hybridisierraum heraus sowie eine Probenzuführung. Eine verbesserte Temperaturkontrolle und eine Bewegung der Flüssigkeit mit den RNA-Mustern gegenüber den auf dem Objektträger immobilisierten DNA-Proben ist ebenfalls offenbart. Allerdings dauert es zu lange, bis eine einigermassen gute Verteilung der Musterflüssigkeit bzw. der Medien im Hybridisierraum gegenüber den an der Oberfläche der Objektträger immobilisierten Proben erreicht wird, zudem wird der Verbrauch an Musterflüssigkeit als zu hoch betrachtet.

Aufgabe der vorliegenden Erfindung ist es deshalb, eine Vorrichtung vorzuschlagen, mit der die Menge der zu verwendenden Musterflüssigkeit bzw. der Medien im Hybridisierraum minimiert und deren Verteilung gegenüber den an der Substratoberfläche immobilisierten Proben verbessert werden kann.

Diese Aufgabe wird mit der Merkmalskombination des unabhängigen Anspruchs 1 gelöst. Vorteilhafte Weiterbildungen und zusätzliche Merkmale der Erfindung ergeben sich aus den abhängigen Ansprüchen.

WO 02/41994 offenbart ein System zum Hybridisieren von Nukleinsäureproben, Proteinen oder Gewebeschnitten. Dieses System umfasst zumindest eine Vorrichtung zum Bereitstellen eines Hybridisierraums über einem Objektträger. Diese Vorrichtung ist als ein im wesentlichen quaderförmiger, gegenüber diesen Objektträgern bewegbarer Körper ausgebildet und umfasst eine Agitationseinrichtung zum Bewegen der Medien im Hybridisierraum.

Die Erfindung soll nun an Hand von schematischen und beispielhaften Zeichnungen, welche den Umfang der Erfindung nicht beschränken sollen, näher erläutert werden. Dabei zeigt:
- Fig. 1: einen senkrechten Längsschnitt durch eine erfindungsgemässe Vorrichtung gemäss einer ersten Ausführungsform;
- Fig. 2: eine Draufsicht auf die Vorrichtung von Fig. 1, von unten gesehen;
- Fig. 3: einen senkrechten Längsschnitt durch eine erfindungsgemässe Vorrichtung gemäss einer zweiten Ausführungsform;
- Fig. 4: eine Draufsicht auf die Vorrichtung von Fig. 3, von unten gesehen;
- Fig. 5: eine dreidimensionale Ansicht eines Rahmens zum Tragen von vier Objektträgern, mit einem eingesetzten Objektträger;
- Fig. 6A: eine Draufsicht auf ein System mit einer kleinen Verfahrenseinheit;
- Fig. 6B: eine Draufsicht auf ein System mit vier grossen Verfahrenseinheiten;
- Fig. 7A: einen Vertikalschnitt durch eine Verfahrenseinheit mit offener Halterung;
- Fig. 7B: einen Vertikalschnitt durch eine Verfahrenseinheit mit geschlossener Halterung;
- Fig. 8A: eine Musterinjektionseinrichtung gemäss einer ersten Ausführungsform;
- Fig. 8B: eine Musterinjektionseinrichtung gemäss einer zweiten Ausführungsform;
- Fig. 9A: eine Musterinjektionseinrichtung gemäss einer dritten Ausführungsform mit einem zweiteiligen Ventil, beim Einpipettieren der Musterflüssigkeit;
- Fig. 9B: eine Musterinjektionseinrichtung gemäss der dritten Ausführungsform, beim Absenken des ersten Ventilteils;
- Fig. 9C: eine Musterinjektionseinrichtung gemäss der dritten Ausführungsform, beim Anheben des zweiten Ventilteils.

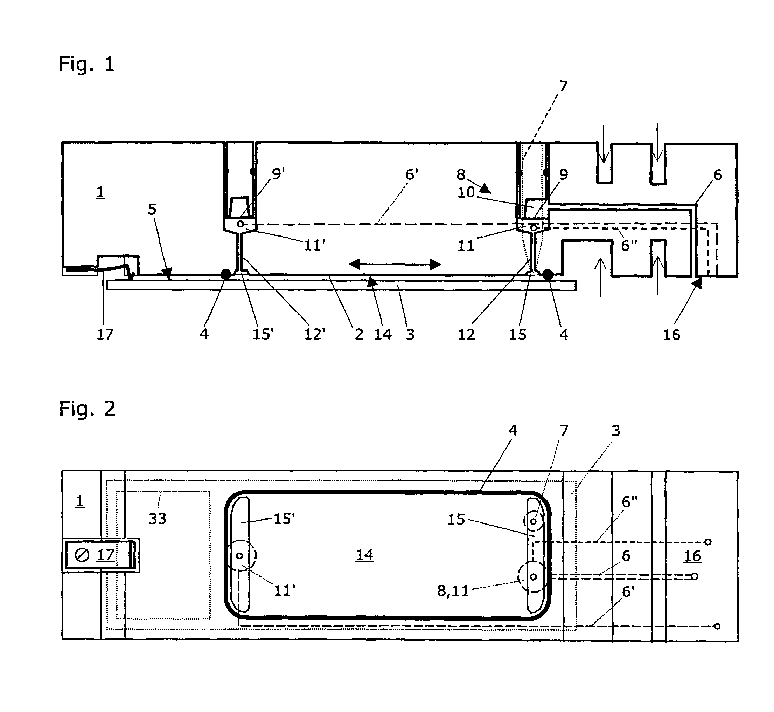

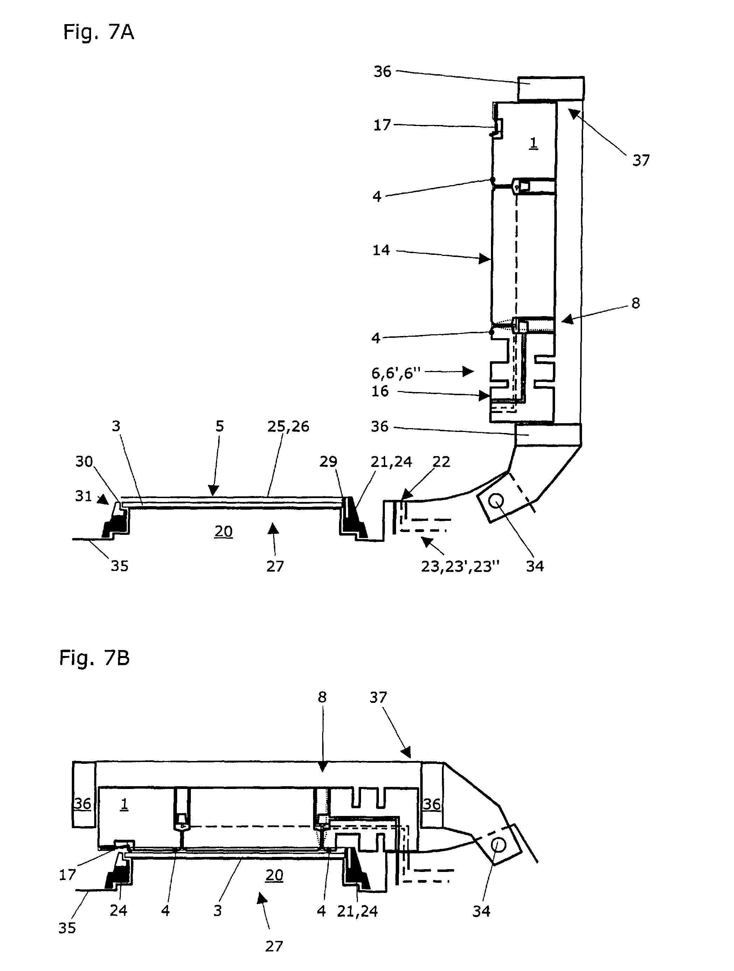

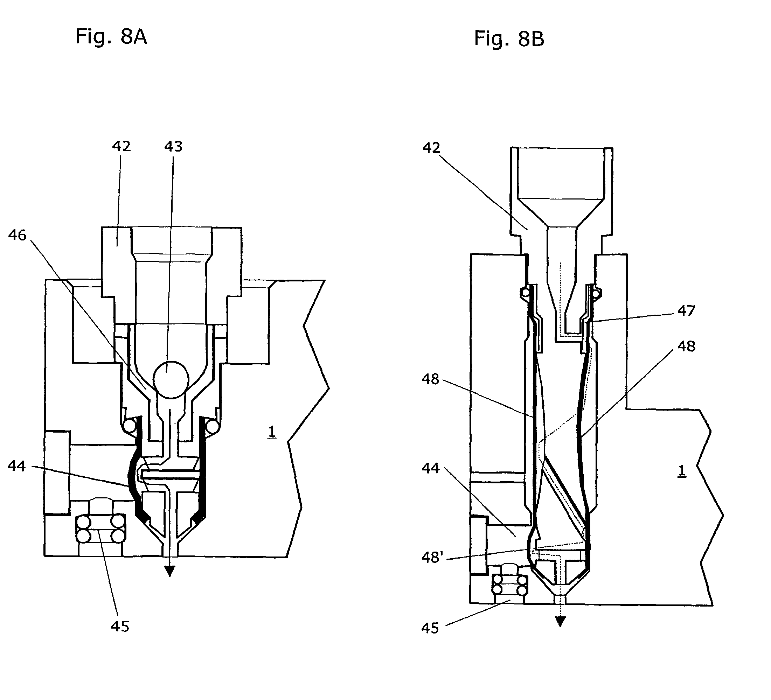

Figur 1 zeigt einen senkrechten Längsschnitt durch eine erfindungsgemässe Vorrichtung 1 gemäss einer ersten Ausführungsform. Diese Vorrichtung dient zum Bereitstellen eines Hybridisierraums 2 für die Hybridisierung von Hybridisierung von Nukleinsäureproben, Proteinen oder Gewebeschnitten auf einem Objektträger 3. Die Vorrichtung 1 ist gegenüber diesem Objektträger 3 bewegbar (hier um eine Achse schwenkbar, vgl. Fig. 7A) ausgebildet, so dass der Hybridisierraum 2 durch eine möglichst einfache Bewegung geöffnet und geschlossen werden kann. Eine ringförmige Dichtfläche 4 dient zum Abschliessen des Hybridisierraums 2 durch Beaufschlagen einer Oberfläche 5 dieses Objektträgers 3. Diese Dichtfläche 4 kann eine abgesetzte Oberfläche der Vorrichtung 1 sein, welche flach auf der Oberfläche 5 des Objektträgers 3 liegt (nicht gezeigt). Bevorzugt wird jedoch eine ringförmige Dichtung als Dichtfläche 4 verwendet (hier als O-Ring gezeichnet und in der Folge als Dichtung 4 bezeichnet), alternativ dazu kann z.B. auch eine Lippendichtung verwendet werden. Die Vorrichtung umfasst Leitungen 6 zum Zu- bzw. Ableiten von Medien in den Hybridisierraum 2 hinein bzw. aus dem Hybridisierraum 2 heraus. Solche Medien können Reagenzien zum Durchführen der Hybridisierungsreaktion, wie z.B. Waschflüssigkeiten oder Puffer-Lösungen, aber auch inerte Gase (wie z.B. Stickstoff) zum Trocknen der Hybridisierungsprodukte auf den Objektträgern bzw. Ausblasen der Medienleitungen 6',6" sein. Diese Zu- bzw. Ableitungen 6',6" für Spülmedien münden bevorzugt je in einen Agitationsraum 11',11. Die Vorrichtung umfasst zudem eine verschliessbare Musterzuführung 7, durch welche von Hand RNA-enthaltende oder andere Musterflüssigkeiten zupipettiert werden können. Die Musterzuführung 7 wird vorzugsweise mit einem Kunststoffpfropfen (nicht gezeigt) verschlossen. Alternativ dazu kann eine automatische Musterzuführung (vgl. Fig. 8) vorgesehen werden. Erfindungsgemäss umfasst die Vorrichtung 1 eine medientrennende Agitationseinrichtung 8 zum Bewegen von Flüssigkeiten gegenüber auf der Oberfläche 5 des Objektträgers 3 immobilisierten Proben von Nukleinsäuren, Proteinen oder Gewebeschnitten.

In der in Figur 1 gezeigten ersten Ausführungsform umfasst die Agitationseinrichtung 8 der Vorrichtung 1 eine Membran 9. Diese Membrane 9 trennt einen Druckraum 10, der über eine der Leitungen 6 mit einem Druckfluid befüllbar ausgebildet ist, von einem Agitationsraum 11, der über eine Agitationsleitung 12 mit dem Hybridisierraum 2 verbunden ist. Nach dem Erreichen des thermischen Gleichgewichtes der Vorrichtung, dem Zugeben eines bestimmten Volumens an RNA-Musterflüssigkeit und dem Verschliessen der Musterzuführung wird über die Zuleitung 6 vorzugsweise Luft oder ein anderes Gas (es könnte aber auch eine Flüssigkeit sein) stossweise in den Druckraum 10 gebracht (Überduckversion) oder daraus abgesogen (Unterdruckversion), so dass sich die Membran 9 im gleichen Rhythmus durchbiegt und entsprechend den Agitationsraum 1 verkleinert bzw. vergrössert. Dadurch wird die Musterflüssigkeit im gleichen Rhythmus des Über- bzw. Unterdrucks und Entspannens im Hybridisierraum 2 gegen das eine oder das andere Ende bewegt, wo sich vorzugsweise an der gegen das Innere des Hybridisierraums 2 gerichteten Oberfläche 14 der Vorrichtung 1 je ein Querströmkanal 15,15' befindet. Diese Querströmkanäle erleichtern einerseits das Querverteilen der in der Musterlösung enthaltenen RNA-Moleküle, dadurch wird bewirkt, dass die Musterflüssigkeit bzw. die Waschflüssigkeiten homogen über die gesamte Fläche 5 im Hybridisierraum 2 verteilt werden. Andererseits können die Querströmkanäle 15,15' auch als Reservoir dienen, so dass bei der durch die in der Vorrichtung eingebauten Agitationseinrichtung 8 erzeugte Pendelbewegung (gefüllter Doppelpfeil) der Musterlösung nicht dazuführt, dass Teile des Hybridisierraums 2 unbeabsichtigt trocken liegen. Vorzugsweise ist ein zweiter, ebenfalls mit einer Membran 9' versehener Agitationsraum 11' über eine zweite Agitationsleitung 12' mit dem Hybridisierraum 2 verbunden. Wenn jetzt ein Druckstoss die erste Membran 9 in den ersten Agitationsraum 11 drückt, wird dieser Impuls über die erste Agitationsleitung 12 auf die Musterflüssigkeit im Hybridisierraum 2 übertragen. Diese weicht etwas gegen die zweite Agitationsleitung 12' aus (kann diese sogar zum Teil füllen) und erhöht den Druck im zweiten Agitationsraum 11'. Dadurch biegt sich die zweite Membran 9' nach oben und wird dabei elastisch gedehnt. Sobald der Überdruck im Druckraum 10 nachlässt, federn beide Membranen 9,9' in ihre Ruheposition zurück und bewegen die Musterflüssigkeit im Hybridisierraum 2 in die entgegengesetzte Richtung. Durch diese Pendelbewegung kann mit der erfindungsgemässen Vorrichtung 1 eine Musterflüssigkeit mit einem minimalen Volumen in weniger als einer Minute praktisch homogen im Hybridisierraum verteilt werden.

Figur 2 zeigt eine Draufsicht auf die Vorrichtung von Figur 1, von unten gesehen. Die O-Ring-Dichtung 4 begrenzt lateral den Hybridisierraum 2, der an seinen einander entgegengesetzten Enden je einen Querströmkanal 15,15' aufweist, welche als Vertiefung in der Oberfläche 14 der Vorrichtung 1 vorgesehen sind. Der Objektträger 3 (hier ein Glasobjektträger für die Lichtmikroskopie) und dessen optionales Griff- und/oder Barcodefeld 33 sind gestrichelt eingezeichnet. Klar ersichtlich ist auch eine Abdrückfeder 17, welche auf das Grifffeld 33 des Objektträgers 3 drückt. Alternativ zur gezeigten Ausführungsform können auch mehrere Abdrückfedern 17 an einer Vorrichtung 1 angeordnet sein, wobei diese Abdrückfedern 17 am ganzen Umfang der Vorrichtung 1 verteilt sein können. Beim Öffnen des Hybridisierraums 2 erleichtern solche Abdrückfedern 17 die automatische Trennung des Objektträgers 3 von der Vorrichtung 1. Ebenfalls ersichtlich ist die Linienführung der Leitungen6,6',6" und die Anordnung der Agitationsräume 11,11' und der Musterzuführung 7. Alle Agitationsleitungen 12,12' und die Musterzuführung münden in den Querströmkanälen 15,15'. Alle Leitungen 6,6',6" zum Zu- bzw. Abführen von Medien münden bevorzugt in einer gemeinsamen Anschlussebene 16, welche im Wesentlichen parallel zum Hybridisierraum 2 angeordnet ist. Dabei können die Mündungsöffnungen wie gezeigt versetzt zu einander oder auf einer quer zu der Vorrichtung 1 verlaufenden Linie (nicht gezeigt) angeordnet sein. Aussparungen (leere Pfeile) reduzieren den Wärmefluss von oder zu der Vorrichtung 1.

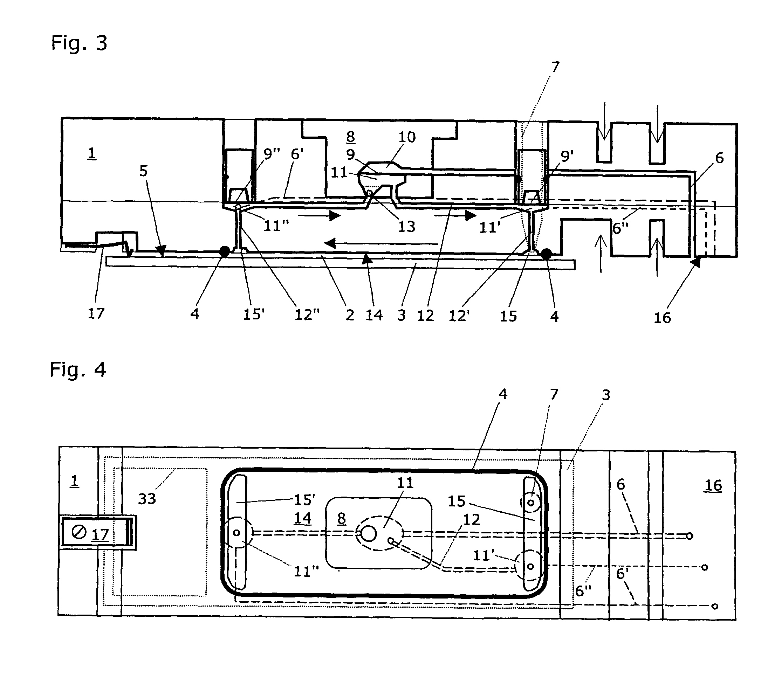

Figur 3 zeigt einen senkrechten Längsschnitt durch eine erfindungsgemässe Vorrichtung 1 gemäss einer zweiten Ausführungsform. Die Agitationseinrichtung 8 ist hier als Membranpumpe ausgebildet und umfasst flusshemmende Mittel 13, die eine bevorzugte Fliessrichtung (gefüllte Pfeile) der bewegten Flüssigkeiten zulassen. Solche flusshemmenden Mittel 13 können Rückschlagventile mit Kugeln (gezeigt in Fig. 3), Membranen etc. umfassen und sind an sich bekannt. Vorzugsweise sind ein zweiter und dritter, mit einer Membran 9',9" versehener Agitationsraum 11',11" über eine zweite bzw. dritte Agitationsleitung 12',12" mit dem Hybridisierraum 2 verbunden. Wenn jetzt ein Druckstoss die erste Membran 9 in den ersten Agitationsraum 11 drückt, wird dieser Impuls (dank der flusshemmenden Mittel 13) nur über die erste und zweite Agitationsleitung 12,12' auf die Musterflüssigkeit im Hybridisierraum 2 übertragen. Diese weicht etwas gegen die dritte Agitationsleitung 12" aus, füllt diese und fliesst über den dritten Agitationsraum 11" in den ersten Agitationsraum 11 zurück. Die Membranen 9',9" in den Agitationsräumen 11',11" werden bei jedem Druckstoss etwas verformt und wirken damit dämpfend, so dass sich eine besonders schonende Bewegung der Musterflüssigkeit im Hybridisierraum 2 ergibt. Sobald der Überdruck im Druckraum 10 nachlässt, federt die Membran 9 in ihre Ruheposition zurück. Dieses Nachfedern wird vorzugsweise durch einen an die Leitung 6 gelegten, gegengleich zu den Druckstössen pulsierenden Unterdruck unterstützt. Durch diese Fliessbewegung in einem geschlossenen Kreis kann mit der erfindungsgemässen Vorrichtung 1 eine Musterflüssigkeit mit einem leicht vergrösserten Volumen in weniger als einer Minute praktisch homogen und besonders schonend im Hybridisierraum verteilt werden.

Figur 4 zeigt eine Draufsicht auf die Vorrichtung von Figur 3, von unten gesehen. Die O-Ring-Dichtung 4 begrenzt lateral den Hybridisierraum 2, der an seinen einander entgegengesetzten Enden je einen Querströmkanal 15,15' aufweist, welche als Vertiefung in der Oberfläche 14 der Vorrichtung 1 vorgesehen sind. Der Objektträger 3 (hier ein Glasobjektträger für die Lichtmikroskopie) und dessen Grifffeld 33 sind gestrichelt eingezeichnet. Klar ersichtlich ist auch die Abdrückfeder 17, welche auf das Grifffeld 33 des Objektträgers 3 drückt. Beim Öffnen des Hybridisierraums 2 erleichtert diese Abdrückfeder 17 die automatische Trennung des Objektträgers 3 von der Vorrichtung 1. Ebenfalls ersichtlich ist die Linienführung der Leitungen 6,6',6" und die Anordnung der Agitationsräume 11,11',11" und der Musterzuführung 7. Die Agitationsleitungen 12',12" und die Musterzuführung 7 münden in den Querströmkanälen 15,15'. Alle Leitungen 6,6',6" zum Zu- bzw. Abführen von Medien münden vorzugsweise in einer gemeinsamen Anschlussebene 16, welche im Wesentlichen parallel zum Hybridisierraum 2 angeordnet ist. Dabei können die Mündungsöffnungen wie gezeigt versetzt zu einander oder auf einer quer zu der Vorrichtung 1 verlaufenden Linie (nicht gezeigt) angeordnet sein. Aussparungen (leere Pfeile) reduzieren den Wärmefluss von oder zu der Vorrichtung 1.

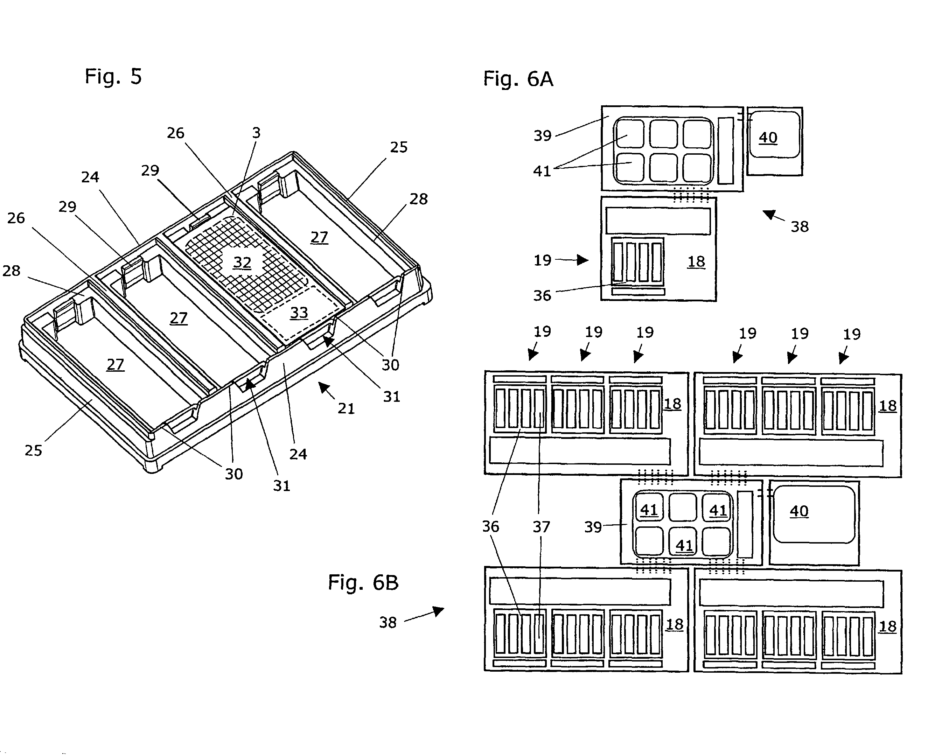

Figur 5 zeigt eine dreidimensionale Ansicht eines Rahmens 21 zum Tragen von vier Objektträgern 3, mit einem eingesetzten Objektträger 3. Der Rahmen 21 umfasst Längswände 24, Querwände 25 und im Wesentlichen parallel zu den Querwänden 25 verlaufende Zwischenwände 26. Diese Wände 24,25,26 umgeben Öffnungen 27, welche den Rahmen 21 vollständig durchdringen. Dabei weisen die Längswände 24 und/oder Querwände 25 und/oder Zwischenwände 26 einen Absatz 28 aufweisen, auf den Objektträger 3 zumindest teilweise auflegbar sind. Vorzugsweise weist der Rahmen 21 ein einer Mikroplatte entsprechendes Aussenflächen- und Stapelflächenprofil auf und umfasst für jeden Objektträger 3 zumindest ein Federelement 29 und einen Anschlag 30 zum federnden Halten der in den Rahmen 21 eingesetzten Objektträger 3.

Dieser Rahmen 21 ist eine Haltevorrichtung für zumindest einen Träger - insbesondere für einen im Wesentlichen plattenförmigen Objektträger 3 - der Materialien wie Glas, Kunststoff, Silizium, pyrolytischen Graphit und/oder Metall umfasst. Der Rahmen 21 weist vorzugsweise an seinem durch die Längswände 24 und Querwände 25 definierten Aussenflächenprofil Angriffsflächen zur Ineingriffnahme durch einen Roboter auf, welche durch Greifer dieses Roboters beaufschlagbar sind. Der Rahmen 21 ist damit als Träger-Adapter für Mikroplattensysteme ausgebildet und weist ein Aussenflächenprofil auf, welches im Wesentlichen mit dem Aussenflächenprofil einer Mikroplatte übereinstimmt. Damit kann ein solcher Rahmen 21, der zudem ein entsprechendes Stapelflächenprofil aufweist, zum Absetzen in einer Mikroplattenstation eines Probenanalyse- und/oder Probenbearbeitungs- und/oder Probenaufbewahrungs-Systems - verwendet werden. Die vorzugsweise von Hand in den Rahmen 21 eingelegten Objektträger 3 werden durch zumindest ein Federelement 29 beaufschlagt, welches zum Ausüben einer Federkraft auf diesen Objektträger 3 ausgebildet ist. Diese Federkraft ist in im Wesentlichen zur Oberfläche 5 des Objektträgers 3 paralleler und/oder senkrechter Richtung gerichtet und drückt diesen Objektträger 3 gegen einen Anschlag 30. Zum einfacheren Einsetzen bzw. Herausnehmen der Objektträger 3 weist der Rahmen 21 Grifföffnungen 31 auf. Jeder eingesetzte Objektträger 3 ist sicher im Rahmen 21 gehalten und muss während des ganzen weiteren Verfahrens nicht mehr mit der Hand berührt werden, wie dies in WO 02 058 850 beschrieben ist. Der Rahmen 21 ist vorzugsweise zusammen mit den Federelementen 29 und den Anschlägen 30 einstückig und im Spritzgussverfahren aus Kunststoff hergestellt.

Auf dem Objektträger 3 sind bevorzugt in einem zweidimensionalen Gitter bzw. in einem Array angeordnete, an die Oberfläche 5 des Objektträgers 3 adsorbierte DNA-Proben immobilisiert. Ein vorzugsweise markiertes, optionales Grifffeld 33 darf mit den Fingern berührt werden. Ganz generell kann ein solches Feld als Griff- und/oder Barcodefeld ausgebildet sein. Im Falle der Verwendung von Barcodes auf den Objektträgern 3 werden bevorzugt Systeme 38 eingesetzt, welche ein Barcode-Lesegerät umfassen. Solche Barcode- oder Grifffelder 33 können auch ganz weggelassen oder in ihrer Grösse reduziert werden, damit eine grössere Oberfläche 5 des Objektträgers 3 zum Aufnehmen der Proben, wie Nukleinsäureproben (z.B. DNA-Mikroarrays), Proteinen oder Gewebeschnitten zur Verfügung steht. In solchen Fällen wird selbstverständlich eine Vorrichtung 1 gewählt, bei welcher der von der Dichtfläche bzw. Dichtung 4 definierte Hybridisierraum 2 vergrössert ist.

Figur 6A zeigt eine Draufsicht auf ein kleines System 38 zum Hybridisieren von Nukleinsäureproben, Proteinen oder Gewebeschnitten mit einer kleinen Verfahrenseinheit 18. Diese Verfahrenseinheit 18 umfasst zumindest eine bereits beschriebene Vorrichtung 1 zum Bereitstellen eines Hybridisierraums 2. Eine solche Verfahrenseinheit 18 umfasst eine Grundplatte 35 (vgl. Abbildung 7A) und vorzugsweise pro Vierergruppe 19 eine, um eine Achse schwenkbare und gegenüber einer Grundplatte 35 verriegelbare Halterung 36 mit vier Sitzen 37, wobei in jeden dieser Sitze 37 eine Vorrichtung 1 einlegbar ist. Bevorzugt erfolgt dieses Einlegen manuell, wobei der sichere Sitz der Vorrichtung 1 in der Halterung 36 durch an sich bekannte Einschnappvorrichtungen (nicht gezeigt) gewährleistet wird. Dieses System 38 umfasst zudem ein Zentralsteuergerät 39, einen Monitor 40 sowie mit den Einheitsleitungen 23,23',23" und den Leitungen 6,6'6" kommunizierende Behälter 41 zum Aufbewahren von Reagenzien bzw. zum Sammeln von Abfällen. Wie in Fig. 6A angedeutet, sind alle Teile des Systems operativ miteinander verbunden.

Figur 6B zeigt eine Draufsicht auf ein grosses System 38 zum Hybridisieren von DNA-Mikroarrays mit vier grossen Verfahrenseinheiten 18. Diese Verfahrenseinheit 18 umfasst zumindest eine bereits beschriebene Vorrichtung 1 zum Bereitstellen eines Hybridisierraums 2. Eine solche Verfahrenseinheit 18 umfasst eine Grundplatte 35 und vorzugsweise pro Vierergruppe 19 eine, um eine Achse schwenkbare und gegenüber einer Grundplatte 35 verriegelbare Halterung 36 mit vier Sitzen 37, wobei in jeden dieser Sitze 37 eine Vorrichtung 1 einlegbar ist. Bevorzugt erfolgt dieses Einlegen manuell, wobei der sichere Sitz der Vorrichtung 1 in der Halterung 36 durch an sich bekannte Einschnappvorrichtungen (nicht gezeigt) gewährleistet wird. Dieses System 38 umfasst zudem ein Zentralsteuergerät 39, einen Monitor 40 sowie mit den Einheitsleitungen 23,23',23" und den Leitungen 6,6'6" kommunizierende Behälter 41 zum Aufbewahren von Reagenzien bzw. zum Sammeln von Abfällen. Wie in Fig. 6B angedeutet, sind alle Teile des Systems operativ miteinander verbunden.

Die in den Figuren 6 einzeln gezeichneten Funktionseinheiten 18,39,40 können wahlweise - ev. zusammen mit weiteren Funktionseinheiten, wie Barcode-Lesern etc. - in einem gemeinsamen Gehäuse zusammengefasst bzw. eingebaut werden. Dabei können die Anzahlen der Verfahrenseinheiten 18 bzw. Vierergruppen 19 praktisch beliebig variieren. Ein Teil dieser Behälter 41 (vorzugsweise vier von sechs) sind zum Schutz der darin enthaltenen Flüssigkeiten gegen Präzipitation beheizt; eine Niveaukontrolle in diesen Behältern erleichtert die Automatisierung bei Systemen 38. Der Prozessor in jedem Zentralsteuergerät 39 erkennt vorzugsweise, welche der Verfahrenseinheiten 18 bzw. Vierergruppen 19 aktiv sind. Der Prozessor wird bevorzugt mit Informationen versorgt, die es dem System 38 erlauben, für jede der Vierergruppen 19 individuelle Hybridisierungsprogramme festzulegen und abzuarbeiten. Im Fall der Verwendung von Barcode-Lesern ist das Zentralsteuergerät 39 bzw. dessen Prozessor vorzugsweise befähigt, die Position jedes einzelnen Objektträgers 3 zu erfassen.
Figur 7A zeigt einen Vertikalschnitt durch eine Verfahrenseinheit 1 zum Hybridisieren von Nukleinsäureproben, Proteinen oder Gewebeschnitten mit offener Halterung 36. Bevorzugt sind die Vorrichtungen 1 parallel zueinander und in einer Vierergruppe 19 angeordnet (vgl. Fig. 6), weil diese Anordnung gerade ein Mass für eine Temperaturkontrollplatte 20 zulässt, auf welche ein Rahmen 21 in der Grösse einer Mikroplatte (vgl. Fig. 5) mit vier parallel zu einander angeordneten Objektträgern 3 passt. Jede dieser Vierergruppen 19 ist einer an ein Temperatursteuergerät angeschlossenen Temperaturkontrollplatte 20 zugeordnet. Eine Temperaturkontrollplatte 20 ist zur flächigen Aufnahme eines vier Objektträger 3 tragenden Rahmens 21 ausgebildet. Der Rahmen 21 umfasst wie oben beschrieben Längswände 24, Querwände 25 und im Wesentlichen parallel zu den Querwänden 25 verlaufende Zwischenwände 26. Diese Wände umgeben Öffnungen 27, welche den Rahmen 21 vollständig durchdringen. Dadurch dass die Längswände 24 und/oder Querwände 25 und/oder Zwischenwände 26 einen Absatz 28 aufweisen, auf den Objektträger 3 zumindest teilweise auflegbar sind, bleibt eine grosse Fläche der Objektträger 3 frei, welche in direkten Kontakt mit der Oberfläche der Temperaturkontrollplatte 20 treten können. Weil die Objektträger 3 im Rahmen 21 sanft federnd gehalten sind und weil die Temperaturkontrollplatte 20 so ausgebildet ist, dass der Rahmen ihr gegenüber etwas abgesenkt werden kann, liegen die Objektträger 3 direkt auf der Oberfläche der Temperaturkontrollplatte 20. Jede Vierergruppe 19 einer Verfahrenseinheit 18 umfasst eine um eine Achse 34 schwenkbare und gegenüber einer Grundplatte 35 verriegelbare Halterung 36 mit vier Sitzen 37, wobei in jeden dieser Sitze 37 eine Vorrichtung 1 einlegbar ist. Jede Verfahrenseinheit 18 umfasst zudem eine Anschlussplatte 22 zum dichtenden Verbinden der Einheitsleitungen 23,23',23" mit den Leitungen 6,6',6" der Vorrichtungen 1. Als Dichtungen für diese Verbindungen werden O-Ringe bevorzugt (nicht gezeigt).

Figur 7B zeigt einen Vertikalschnitt durch eine Verfahrenseinheit 1 zum Hybridisieren von Nukleinsäureproben, Proteinen oder Gewebeschnitten mit geschlossener Halterung 36. Alle vier Hybridisierräume 2 dieser Vierergruppen 19 sind einer an ein Temperatursteuergerät angeschlossenen Temperaturkontrollplatte 20 zugeordnet. Eine Temperaturkontrollplatte 20 ist wie eben beschrieben zur flächigen Aufnahme eines vier Objektträger 3 tragenden Rahmens 21 ausgebildet. Jede Vierergruppe 19 einer Verfahrenseinheit 18 umfasst eine um eine Achse 34 schwenkbare und gegenüber einer Grundplatte 35 verriegelbare Halterung 36 mit vier Sitzen 37, wobei in jeden dieser Sitze 37 eine Vorrichtung 1 einlegbar ist. Um sicherzustellen, dass die Vorrichtungen 1 planparallel zu den Objektträgern 3 platziert werden können, weist die Halterung zudem noch ein Mittelgelenk (nicht gezeigt) mit einer zur Achse 34 parallelen Beweglichkeit auf. Damit die Dichtungen 4 die Hybridisierräume 2 zuverlässig abschliessen, wird über die Halterung 36 ein zusätzlicher Druck auf die Vorrichtungen 1 ausgeübt, dies kann über Schrauben, Kipphebel oder ähnliche bekannte Vorrichtungen (nicht gezeigt) bewerkstelligt werden.

Jede Verfahrenseinheit 18 umfasst zudem eine Anschlussplatte 22 zum dichtenden Verbinden der Einheitsleitungen 23,23',23" mit den Leitungen 6,6',6" der Vorrichtungen 1. Als Dichtungen für diese Verbindungen werden O-Ringe bevorzugt (nicht gezeigt).

Figur 8 zeigt Musterinjektionseinrichtungen gemäss einer ersten bzw, einer zweiten Ausführungsform. Solche Musterinjektionseinrichtungen werden bevorzugt an der Stelle von manuellen Musterzuführungen 7 in vollautomatisierten Systemen 38 vorgesehen, bei denen auch die Musterinjektion automatisch passieren soll.

Gemäss Figur 8A umfasst eine entsprechende Vorrichtung 1 eine Musterinjektionseinrichtungen gemäss einer ersten Ausführungsform mit einem Musteraufnahmegefäss 42, einer Schwimmkugel 43, einer Dichtmembran 44 und einem Vakuumanschluss 45. Ein bestimmtes Volumen einer Musterlösung wird ohne Druck und vorzugsweise mit einem Pipettierautomaten (nicht gezeigt) in das Musteraufnahmegefäss 42 pipettiert, die Schwimmkugel 43 schwimmt dabei auf der Musterlösung. Die Musterlösung wird in den Hybridisierraum 2 eingeleitet, sobald die Dichtmembran 44 über den Vakuumanschluss 45 einem Unterdruck ausgesetzt wird: Diese Dichtmembran 44 deformiert sich elastisch so, dass der querliegende Abschluss von der Musterflüssigkeit umflossen wird (siehe Pfeil). Ein Belüften des Vakuumanschlusses verschliesst sofort diese Musterinjektionseinrichtung. Wird im Wesentlichen das ganze, in das Musteraufnahmegefäss 42 pipettierte Volumen der Musterflüssigkeit in den Hybridisierraum 2 eingelassen, so verschliesst die Schwimmkugel 43 selbsttätig die Öffnung der Musterinjektionseinrichtung, so dass keine Luft in den Hybridisierraum 2 gelangen kann. Ein Teil 46 des Musteraufnahmegefässes 42 ist als Ventilsitz ausgebildet, wobei für den Ventilsitz 42 oder (vorzugsweise) für die Schwimmkugel 43 ein weiches Kunststoffmaterial bevorzugt wird.

Gemäss Figur 8B umfasst eine entsprechende Vorrichtung 1 eine Musterinjektionseinrichtungen gemäss einer zweiten Ausführungsform mit einem Musteraufnahmegefäss 42, einer Dichtmembran 44 und einem Vakuumanschluss 45. Ein bestimmtes Volumen einer Musterlösung wird mit Druck und vorzugsweise mit einem Pipettierautomaten (nicht gezeigt) in das Musteraufnahmegefäss 42 pipettiert. Für diesen Zweck ist das Musteraufnahmegefäss 42 so gestaltet, dass die eingesetzte Pipettenspitze des Pipettierautomaten an der Innenwand des Musteraufnahmegefässes 42 dichtend anliegt. Der mit dem Pipettierautomaten erzeugte Überdruck ermöglicht es, ein bestimmtes Volumen Musterflüssigkeit gegen den Widerstand der ersten, eng anliegenden Membran 47 in den Raum zwischen der zweiten Membran 48 und dem verengten Musteraufnahmegefäss 42 einzupressen. Die Musterflüssigkeit wird in den Hybridisierraum 2 eingeleitet, sobald die zweite Membran 48 über den Vakuumanschluss 45 einem Unterdruck ausgesetzt wird: Diese zweite Membran 48 deformiert sich elastisch so, dass der querliegende Abschluss von der Musterflüssigkeit umflossen wird (siehe gestrichelter Pfeil). Ein Belüften des Vakuumanschlusses verschliesst sofort diese Musterinjektionseinrichtung. Wird im Wesentlichen das ganze, in das Musteraufnahmegefäss 42 pipettierte Volumen der Musterflüssigkeit in den Hybridisierraum 2 eingelassen, so verschliesst die erste Membran 47 selbsttätig die Öffnung der Musterinjektionseinrichtung, so dass keine Luft in den Hybridisierraum 2 gelangen kann.

Bei den in den Figuren 8A und 8B gezeigten Musterinjektionseinrichtungen erleichtert ein bevorzugt zu diesem Zweck im Hybridisierraum 2 herrschender, leichter Unterdruck das Füllen des Hybridisierraums 2 mit der Musterflüssigkeit.

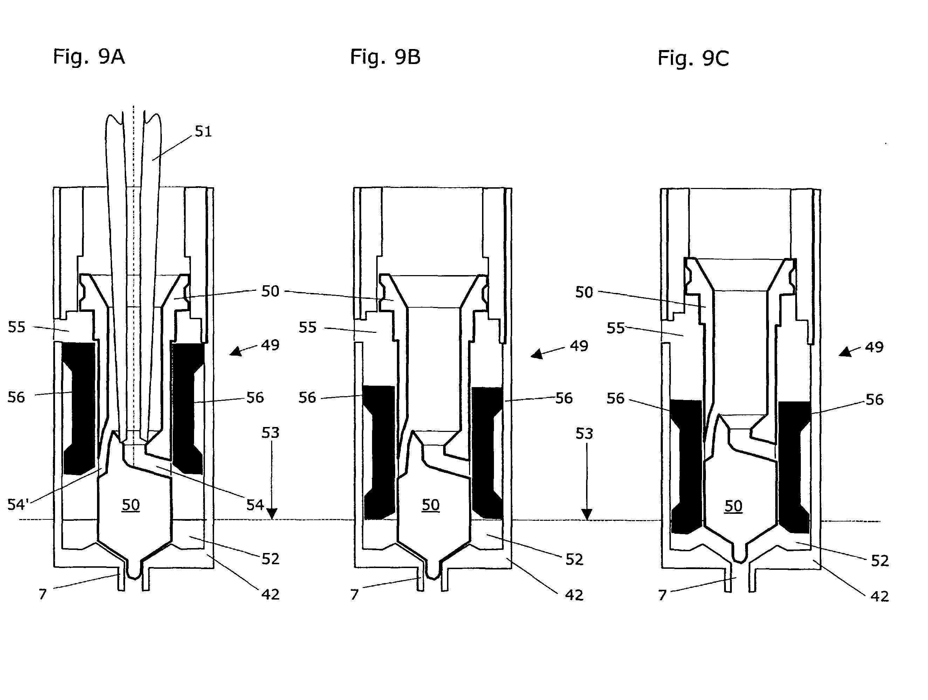

Figur 9 zeigt eine Musterinjektionseinrichtung gemäss einer dritten Ausführungsform mit einem zweiteiligen Ventil 49, beim Einpipettieren der Musterflüssigkeit in das Musteraufnahmegefäss 42 (vgl. Fig. 9A). Ein erster Teil 50 dieses zweiteilige Ventils 49 ist in seiner untersten Position und verschliesst die Musterzuführung 7 der Vorrichtung 1. Über die Pipettenspitze 51 fliesst ein vorzugsweise definiertes Volumen der Musterflüssigkeit über die Leitung 54 in den Raum 52 zwischen dem Musteraufnahmegefäss 42 und dem ersten Ventilteil 50, wobei die Oberfläche der Flüssigkeit ein entsprechendes Niveau 53 definiert und die überschüssige Luft über die Leitung 54' entweicht.

Über den Anschluss 55 wird ein Überdruckmedium (z.B. Stickstoffgas) in den Raum zwischen dem ersten Ventilteil 50 und dem ringförmigen zweiten Ventilteil 56 geleitet, was bewirkt, dass der zweite Ventilteil 56, der auf einer grösseren Fläche mit dem Überdruckmedium beaufschlagt wird, nach unten ausweicht (vgl. Fig. 9B), bis er die Musterflüssigkeit berührt und durch diese gebremst wird. Dabei werden automatisch die Leitungen 54,54' geschlossen. Nun bewirkt der immer noch anhaltende Überdruck, dass sich der zweite Ventilteil 50 bis zu seiner Endstellung nach oben bewegt (vgl. Fig. 9C) wodurch die Musterzuführung 7 geöffnet und die Musterflüssigkeit in den Hybridisierraum gelangt. Der Überdruck bewirkt nun des Weiteren, dass sich der zweite Ventilteil 56 ganz nach unten bis in seine Endposition bewegt und damit die Musterflüssigkeit aus dem Raum 52 hinausdrückt. Die Musterflüssigkeit wird also gemäss dieser Ausführungsform einer Musterinjektionseinrichtung und im Gegensatz zu den beiden vorher beschriebenen (vgl. Fig. 8) unter Druck in den Hybridisierraum 2 geleitet.

Diese eben beschriebene, dritte Ausführungsform betrifft eine vorzugsweise als Verbrauchsmaterial konzipierte Musterinjektionseinrichtung, weil dann auf ein Wiederherstellen von deren Ursprungszustand (vgl. Fig. 9A) verzichtet werden kann. Dies wird vor allen dann bevorzugt, wenn auch die Vorrichtung 1 als Verbrauchsmaterial und damit nur zur einmaligen Verwendung bestimmt ist.

Damit diese Vorgänge routinemässig und möglichst reproduzierbar ablaufen können, umfasst ein System 38 einen Pipettierautomaten mit welchem Muster in die Musteraufnahmegefässe 42 der Vorrichtungen 1 abgegeben werden können sowie eine Vakuumeinrichtung zu Erzeugen eines Unterdrucks an der Dichtmembran 44. Bevorzugt sind dabei Systeme, bei denen Pipettierautomat und Vakuumeinrichtung über das Zentralsteuergerät 39 ansteuerbar bzw. regelbar sind. Zur besseren Beobachtbarkeit der Prozesse in den Hybridisierräumen 2 wird die Vorrichtung 1 bevorzugt aus einem zumindest teilweise durchsichtigen Kunststoff hergestellt. Mit Fluorescein "gelabelte" Muster sind lichtempfindlich; eine lichtundurchsichtige Abdeckung wird deshalb vorzugsweise auf je eine Vierereinheit 19 gesetzt, um den Lichtzutritt zu den mit Fluoreszenzstoffen versetzten Mustern in den Hybridisierräumen 2 zu verhindern.

Die Bezugszeichen bezeichnen jeweils gleiche Merkmale, auch wenn nicht zu jeder Figur alle Merkmale ausdrücklich benannt werden.

## Patentansprüche

1. System (38) mit Verfahrenseinheiten (18) zum Hybridisieren von Nukleinsäureproben, Proteinen oder Gewebeschnitten, wobei jede Verfahrenseinheit (18) umfasst:
a) zumindest eine Vorrichtung (1) zum Bereitstellen eines Hybridisierraums (2) über einem Objektträger (3), wobei jede Vorrichtung (1) als ein im wesentlichen quaderförmiger, gegenüber diesen Objektträgern (3) bewegbarer Körper ausgebildet ist und umfasst:
eine ringförmige Dichtfläche (4) zum Abschliessen des Hybridisierraums (2) durch Beaufschlagen einer Oberfläche (5) eines dieser Objektträger (3);
• Leitungen (6',6") zum Zu- bzw. Ableiten von Medien in den Hybridisierraum (2) hinein bzw. aus dem Hybridisierraum (2) heraus;
• eine Musterzuführung (7); und
• eine Agitationseinrichtung (8) zum Bewegen von Flüssigkeiten gegenüber von auf der Oberfläche (5) eines Objektträgers (3) immobilisierten Proben, wobei diese Agitationseinrichtung (8) zumindest eine Membran (9) umfasst, die einen Druckraum (10), der über eine Leitung (6) mit einem Druckfluid befüllbar ausgebildet ist, von zumindest einem Agitationsraum (11,11') trennt, welcher über eine Agitationsleitung (12,12') mit dem Hybridisierraum (2) verbunden ist;
• eine Anschlussebene (16), in welche die von dem Druckraum (10) bzw. von den Agitationsräumen (11,11') ausgehenden Leitungen (6,6',6") einmünden, wobei diese Leitungen (6,6',6") durchgehend offen sind, so dass die Medien darin immer ungehindert fliessen können; sowie
b) eine an ein Temperatursteuergerät angeschlossene Temperaturkontrollplatte (20) mit deren Oberfläche die Objektträger (3) in direkten Kontakt treten.

2. System (38) nach Anspruch 1, **dadurch gekennzeichnet, dass** die von dem Druckraum (10) bzw. von den Agitationsräumen (11,11') ausgehenden, durchgehend offenen Leitungen (6,6',6") einer Vorrichtung (1) in einer gemeinsamen Anschlussebene (16) münden.

3. System (38) nach Anspruch 2, **dadurch gekennzeichnet, dass** es eine Anschlussplatte (22) zum dichtenden Verbinden von Einheitsleitungen (23,23',23") mit den Leitungen (6,6',6") der Vorrichtungen (1) umfasst, wobei die Anschlussplatte (22) im wesentlichen parallel zum Hybridisierraum (2) und zu der gemeinsamen Anschlussebene (16) angeordnet ist.

4. System (38) nach einem der vorhergehenden Ansprüche, **dadurch gekennzeichnet, dass** es einen Rahmen (21) zum Tragen von in diesen Rahmen eingesetzten Objektträgern (3) umfasst.

5. System (38) nach Anspruch 4, **dadurch gekennzeichnet, dass** der Rahmen (21) als Objektträger-Adapter für Mikroplattensysteme, insbesondere zum Einsetzen von vier Glasobjektträgern (3), ausgebildet ist.

6. System (38) nach einem der Ansprüche 4 oder 5, **dadurch gekennzeichnet, dass** der Rahmen (21) ein einer Mikroplatte entsprechendes Aussenflächen- und Stapelflächenprofil aufweist und für jeden Objektträger (3) zumindest ein Federelement (29) und einen Anschlag (30) zum federnden Halten der in den Rahmen (21) eingesetzten Objektträger (3) umfasst.

7. System (38) nach einem der vorhergehenden Ansprüche, **dadurch gekennzeichnet, dass** die Vorrichtung (1) einen zweiten, mit einer Membran 9' versehenen Agitationsraum (11') umfasst, der über eine zweite Agitationsleitung 12' mit dem Hybridisierraum (2) verbunden ist.

8. System (38) nach einem der vorhergehenden Ansprüche, **dadurch gekennzeichnet, dass** die Agitationseinrichtung (8) als Membranpumpe ausgebildet ist, welche flusshemmende Mittel (13) umfasst, die eine bevorzugte Fliessrichtung der bewegten Flüssigkeiten zulassen.

9. System (38) nach Anspruch 8, **dadurch gekennzeichnet, dass** die Vorrichtung (1) einen zweiten und dritten, mit einer Membran (9',9") versehener Agitationsraum (11',11") umfasst, welche über eine zweite bzw. dritte Agitationsleitung (12',12") mit dem Hybridisierraum (2) verbunden sind.

10. System (38) nach einem der vorhergehenden Ansprüche, **dadurch gekennzeichnet, dass** die Vorrichtung (1) an einer gegen das Innere des Hybridisierraums (2) gerichteten Oberfläche (14) im Bereich der beiden einander gegenüber liegenden Enden des Hybridisierraums (2) je einen Querströmkanal (15,15') aufweist.

11. System (38) nach einem der vorhergehenden Ansprüche, **dadurch gekennzeichnet, dass** jede Verfahrenseinheit (18) eine um eine Achse (34) schwenkbare und gegenüber einer Grundplatte (35) verriegelbare Halterung (36) mit Sitzen (37) umfasst, wobei in jeden dieser Sitze (37) eine Vorrichtung (1) einlegbar ist.

12. System (38) nach einem der vorhergehenden Ansprüche, **dadurch gekennzeichnet, dass** es zumindest eine Verfahrenseinheit (18), ein Zentralsteuergerät (39), einen Monitor (40) sowie mit den Einheitsleitungen (23,23',23") und den Leitungen (6,6'6") kommunizierende Behälter (41) zum Aufbewahren von Reagenzien bzw. zum Sammeln von Abfällen umfasst.

13. System (38) nach einem der vorhergehenden Ansprüche, **dadurch gekennzeichnet dass** es zumindest eine Vorrichtung (1) umfasst, die ein Musteraufnahmegefäss (42) mit einer Schwimmkugel (43), eine Dichtmembran (44) und einen Vakuumanschluss (45) aufweist, bei der die Probe in den Hybridisierraum (2) eingeleitet wird, sobald die Dichtmembran (44) über den Vakuumanschluss einem Unterdruck ausgesetzt wird.

14. System (38) nach Anspruch 13, **dadurch gekennzeichnet, dass** es einen Pipettierautomaten umfasst mit welchem Muster in die Musteraufnahmegefässe (42) der Vorrichtungen (1) abgegeben werden können und dass es eine Vakuumeinrichtung zu Erzeugen eines Unterdrucks an der Dichtmembran (44) umfasst, wobei Pipettierautomat und Vakuumeinrichtung über das Zentralsteuergerät (39) ansteuerbar bzw. regelbar sind.

15. System (38) nach einem der vorhergehenden Ansprüche, **dadurch gekennzeichnet, dass** es zumindest eine Vorrichtung (1) umfasst, die aus zumindest teilweise durchsichtigem Kunststoff hergestellt ist.

16. System (38) nach Anspruch 15, **dadurch gekennzeichnet, dass** es zumindest eine licht-undurchsichtige Abdeckung zum Aufsetzen auf eine Verfahrenseinheit (18) umfasst.

## Claims

1. System (38) with process units (18) for hybridization of nucleic acid, protein or tissue section samples, each process unit (18) comprising:
a) at least one device (1) for preparation of a hybridization chamber (2) on a specimen carrier (3), each device (1) taking the form of an essentially rectangular body, movable with respect to these specimen carriers (3) and comprising:
• a ring-shaped seal (4) by which the hybridization chamber (2) of one of these specimen carriers (3) can be closed by superposition of a surface (5);
• ducts (6', 6") to inject media into the hybridization chamber (2) or draw media off from the hybridization chamber (2);
• a sample injector (7); and
• an agitator device (8) to move liquids relative to samples immobilized on the surface (5) of a specimen carrier (3), this agitator device (8) comprising at least one membrane (9) separating a pressure chamber (10), which can be filled with a pressure fluid through a duct (6), from at least one agitation chamber (11, 11') which is connected to the hybridization chamber (2) through an agitation duct (12, 12');
• a connection surface (16), into which open the ducts (6, 6', 6") from the pressure chamber (10) or the agitation chambers (11, 11'), these ducts (6, 6', 6") being entirely open so that the media can always flow through them unhindered; and
b) a temperature control plate (20), connected to a temperature control device, with the surface of which the specimen carriers (3) come into direct contact.

2. System (38) according to Claim 1, **characterized in that** the entirely open ducts (6, 6', 6") from the pressure chamber (10) or the agitation chambers (11, 11') of a device (1) open into a common connection surface (16).

3. System (38) according to Claim 2, **characterized in that** it includes a connection plate (22) for the leak-tight connection of unit ducts (23, 23', 23") to the ducts (6, 6', 6") of the devices (1), the connection plate (22) being arranged essentially parallel to the hybridization chamber (2) and to the common connection surface (16).

4. System (38) according to one of the above Claims, **characterized in that** it includes a frame (21) to support specimen carriers (3) placed in it.

5. System (38) according to Claim 4, **characterized in that** the frame (21) is designed as a specimen carrier adapter for microplate systems, especially for the accommodation of four glass slides (3).

6. System (38) according to one of Claims 4 or 5, **characterized in that** the frame (21) displays an outer surface profile and stacking profile corresponding to a microplate and includes for each specimen carrier (3) at least one spring element (29) and one stop (30) for the elastically bedded support in the frame (21) of the specimen carriers (3) inserted in it.

7. System (38) according to one of the above Claims, **characterized in that t**he device (1) includes a second agitation chamber (11') equipped with a membrane (9') and connected to the hybridization chamber (2) through a second agitation duct (12').

8. System (38) according to one of the above Claims, **characterized in that** the agitator device (8) takes the form of a membrane pump provided with means for flow restraint (13) to permit flow in a preferred direction of the liquids moved.

9. System (38) according to Claim 8, **characterized in that** the device (1) includes second and third agitation chambers (11', 11") equipped with membranes (9', 9") connected to the hybridization chamber (2) via a second or third agitation duct (12', 12").

10. System (38) according to one of the above Claims, **characterized in that** the device (1) possesses cross-flow channels (15, 15'), one in the region of each of the opposite ends of the hybridization chamber (2) in a surface (14) facing the inside of the hybridization chamber (2).

11. System (38) according to one of the above Claims, **characterized in that** each process unit (18) comprises a holder (36) that can be tilted about an axis (34) and locked against a base plate (35) and includes seats (37), into each of which seats (37) a device (1) can be inserted.

12. System (38) according to one of the above Claims, **characterized in that** it includes at least one process unit (18), a central control device (39), a monitor (40) and containers (41) communicating with the unit ducts (23, 23', 23") and the ducts (6, 6', 6") for storage of reagents or collection of waste.

13. System (38) according to one of the above Claims, **characterized in that** it includes at least one device (1) provided with a sample reception container (42) with a floating ball (43), a sealing membrane (44) and a vacuum connection (45), such that the sample is drawn into the hybridization chamber (2) as soon as the sealing membrane (44) is subjected to negative pressure via the vacuum connection.

14. System (38) according to Claim 13, **characterized in that** it includes an automatic pipetter with which samples can be delivered into the sample reception containers (42) of the devices (1) and also includes a vacuum device to generate negative pressure on the sealing membrane (44), the automatic pipetter and the vacuum device being controlled or regulated, as the case may be, by the central control device (39).

15. System (38) according to one of the above Claims, **characterized in that** it includes at least on device (1) made from at least partially transparent plastic.

16. System (38) according to Claim 15, **characterized in that** it includes at least one cover opaque to light that can be placed over a process unit (18).

## Revendications

1. Système (38) comprenant des unités de traitement (18) pour l'hybridation d'échantillons d'acide nucléique, de protéines ou de tissus, dans lequel chaque unité de traitement (18) englobe:
a) d'au moins un dispositif (1) pour la préparation d'un espace d'hybridation (2) sur un porte-objet (3), dans lequel chaque dispositif (1) est monté comme un corps mobile de forme essentiellement parallélépipédique par rapport à ces porte-objets (3) et comprend :
• une surface étanche en forme d'anneau (4) pour isoler l'espace d'hybridation (2) par superposition d'une surface (5) de l'un de ces porte-objets (3) ;
• des conduites (6', 6") pour introduire des milieux dans l'espace d'hybridation (2) ou les évacuer hors de l'espace d'hybridation (2) ;
• un dispositif d'introduction des échantillons (7) et
• un dispositif d'agitation (8) pour agiter des liquides au-dessus des échantillons immobilisés à la surface (5) d'un porte-objet (3), ce dispositif d'agitation (8) comprenant au moins une membrane (9) qui assure la séparation entre une chambre de pression (10) que l'on peut remplir au moyen d'une conduite (6) avec un fluide sous pression, et au moins un espace d'agitation (11, 11'), lui-même étant relié à l'espace d'hybridation (2) par une conduite d'agitation (12, 12') ;
• un plan de jonction (16) dans lequel débouchent les conduites (6, 6' et 6") provenant de la chambre de pression (10) ou des espaces d'agitation (11, 11'), ces conduites (6, 6' et 6") étant toujours ouvertes afin de laisser les milieux circuler librement ; ainsi que
b) d'une plaque de contrôle de la température (20) raccordée à un appareil de contrôle de la température et avec la surface de laquelle les porte-objets (3) sont en contact direct.

2. Système (38) selon la revendication 1, **caractérisé en ce que** les conduites (6, 6', 6") toujours ouvertes d'un dispositif (1) provenant de la chambre de pression (10) ou des espaces d'agitation (11, 11') aboutissent à un plan de jonction commun (16).

3. Système (38) selon la revendication 2, **caractérisé en ce qu'**il comprend une plaque de raccordement (22) assurant la liaison étanche de conduites d'unité (23, 23', 23") avec les conduites (6, 6', 6") des dispositifs (1), dans lequel la plaque de raccordement (22) est disposée essentiellement de façon parallèle à l'espace d'hybridation (2) et au plan de jonction commun (16).

4. Système (38) selon l'une des revendications précédentes, **caractérisé en ce qu'**il comprend un cadre (21) pour supporter les porte-objets (3) qui sont insérés dans ce cadre.

5. Système (38) selon la revendication 4, **caractérisé en ce que** le cadre (21) est conçu comme un adaptateur de porte-objet pour des systèmes de micro-plaques, et en particulier pour l'insertion de quatre porte-objets en verre (3).

6. Système (38) selon la revendication 4 ou 5, **caractérisé en ce que** le cadre (21) présente un profil de face extérieure et un profil d'empilement correspondant à une micro-plaque et comprend au moins une languette (29) et une butée (30) pour retenir de manière flexible le porte-objet (3) inséré dans le cadre (21).

7. Système (38) selon l'une des revendications précédentes, **caractérisé en ce que** le dispositif (1) comprend un deuxième espace d'agitation (11') pourvu d'une membrane (9') et relié à l'espace d'hybridation (2) par une deuxième conduite d'agitation (12').

8. Système (38) selon l'une des revendications précédentes, **caractérisé en ce que** le dispositif d'agitation (8) est conçu comme une pompe à membrane comprenant des moyens ralentissant le flux (13) qui permettent d'obtenir une direction de flux préférée pour les liquides agités.

9. Système (38) selon la revendication 8, **caractérisé en ce que** le dispositif (1) comprend un deuxième et un troisième espace d'agitation (11', 11") pourvus d'une membrane (9', 9") et reliés à l'espace d'hybridation (2) par une deuxième ou une troisième conduite d'agitation (12', 12").

10. Système (38) selon l'une des revendications précédentes, **caractérisé en ce que** le dispositif (1) présente, sur une surface (14) orientée vers l'intérieur de l'espace d'hybridation (2), un canal de flux perpendiculaire (15, 15') près de chacun des deux côtés opposés de l'espace d'hybridation (2).

11. Système (38) selon l'une des revendications précédentes, **caractérisé en ce que** chaque unité de traitement (18) comprend une fixation (36) pivotant autour d'un axe (34) et blocable contre une plaque de base (35), cette fixation possédant des logements (37), un dispositif (1) étant insérable dans chacun de ces logements (37).

12. Système (38) selon l'une des revendications précédentes, **caractérisé en ce qu'**il comprend au moins une unité de traitement (18), un système de commande central (39), un écran de contrôle (40), ainsi que des containeurs (41) communiquant avec les conduites d'unité (23, 23', 23") et les conduites (6, 6', 6"), afin de conserver les réactifs ou collecter les déchets.

13. Système (38) selon l'une des revendications précédentes, **caractérisé en ce qu'**il comprend au moins un dispositif (1) qui présente un récipient de prélèvement d'échantillons (42) avec une bille flottante (43), une membrane étanche (44) et une prise à vide (45), par laquelle l'échantillon est introduit dans l'espace d'hybridation (2) dès qu'une dépression est exercée sur la membrane étanche (44) par l'intermédiaire de la prise à vide (45).

14. Système (38) selon la revendication 13, **caractérisé en ce qu'**il comprend un robot pipetteur permettant de mettre des échantillons dans le récipient de prélèvement d'échantillons (42) des dispositifs (1) et **en ce qu'**il comprend un système de création de vide pour produire une dépression sur la membrane étanche (44), dans lequel le robot pipetteur et le système de création de vide peuvent être commandés ou réglés grâce au système de commande central (39).

15. Système (38) selon l'une des revendications précédentes, **caractérisé en ce qu'**il comprend au moins un dispositif (1) fabriqué au moins en partie à partir d'un plastique transparent.

16. Système (38) selon la revendication 15, **caractérisé en ce qu'**il comprend au moins un couvercle ne laissant pas passer la lumière pour recouvrir une unité de traitement (18).
